# EUROPEAN PATENT APPLICATION

(11) **EP 4 400 676 A1**
(43) Date of publication of application: **17.07.2024**
(21) Application number: 23170676.3
(22) Date of filing: 28.04.2023
(51) Int. Cl.: E04H 4/16

(54) **ROBOT SWIMMING POOL CLEANER WITH CONVENIENT-TO-REPLACE BATTERY**

(30) Priority: 13.01.2023 CN 202310040417
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Ye, Yudong, Shenzhen (CN); Li, Kun, Shenzhen (CN); Li, Yunxuan, Shenzhen (CN)
(74) Representative: Zaboliene, Reda

(57) **Abstract**

The application belongs to the technical field of a swimming pool cleaning device and discloses a robot swimming pool cleaner with a convenient-to-replace battery, which includes a body. The body is provided with a garbage bin and an ejection bin having a top opening therein. The garbage bin communicates with an outside world through a sewage suction port. A bottom of the body is provided with a road wheel. A winding component and a battery module are sequentially installed in the ejection bin. The battery module is located on top opening. The battery module is a buoyancy member. An electric wire is wound on the winding component. One end of the electric wire is electrically connected with the body, and the other end of the electric wire is wound on the winding component and is electrically connected to a waterproof sealed plug. The battery module and the waterproof sealed plug are detachably connected. The robot swimming pool cleaner further includes a control component which is respectively connected with the winding component and the battery module. According to the present application, the battery module may be disengaged, when in low battery, from a machine and floats on a water surface. A user may directly replace a fully charged battery pack to continue to work without waiting or salvage, thereby improving the user experience and cleaning efficiency.

## Description

### Technical Field

The application relates to the technical field of a swimming pool cleaning device, and in particular to a robot swimming pool cleaner with a convenient-to-replace battery.

### Background

With the rapid development of the present age, a swimming pool (including an underground or over-ground swimming pool) may be installed in many families. The swimming pool is a place for joy and entertainment. Whatever an outdoor swimming pool or an indoor swimming pool, some garbage, bacteria and sludge would be generated at the bottom of the swimming pool after use for a period of time and be easily accumulated in the swimming pool to form dirt. Moreover, while being adsorbed on the bottom of the swimming pool, the dirt would not be effectively cleaned by normally circulating and filtering the water, therefore, the swimming pool is required for periodic cleaning.

A robot swimming pool cleaner (including an over-ground or underground robot) may perform an operation of swimming pool cleaning. Most of common swimming pool robots in the market are wireless and are powered by a battery. However, the biggest drawback lies in that they are short in duration time. When power out, a user needs to salvage the whole robot swimming pool cleaner out of the swimming pool, charges it for a long time, and transports it to the swimming pool which may not be swept cleanly at this time, thereby resulting in low cleaning efficiency and poor user experience.

### Summary

For the technical problem in a related art, the present application provides a robot swimming pool cleaner with a convenient-to-replace battery, which may avoid the troublesome process of frequent salvage and charging of a user, and enable a battery pack to be disengaged, when powers out, from a machine and to float on a water surface. The user may directly replace a fully charged battery pack without waiting or salvage, thereby improving the user experience and cleaning efficiency.

A technical solution includes a body. The body is provided with a garbage bin and an ejection bin therein. The ejection bin includes a top opening. The garbage bin is located at one side of the ejection bin. The garbage bin communicates with the outside world through a sewage suction port. A bottom of the body is provided with a road wheel. A winding component and a battery module are sequentially installed in the ejection bin. The battery module is located on top opening. The battery module is a buoyancy member. An electric wire is wound on the winding component. A first end of the electric wire is electrically connected with the body, and a second end of the electric wire is wound on the winding component and is electrically connected to a waterproof sealed plug. The battery module and the waterproof sealed plug are detachably connected.

The robot swimming pool cleaner further includes a control component which is respectively connected with the winding component and the battery module. When the battery module is fully charged, the control component controls the winding component to wind the electric wire, the waterproof sealed plug and the battery module are located in the ejection bin under an action of the winding component. When the battery module is in low battery, the control component controls the winding component to unwind the electric wire, the waterproof sealed plug and the battery module are disengaged from the ejection bin.

Preferably, the body is provided with a sealed bin body and an injection port therein. The sealed bin body is located at one side, away from the garbage bin, of the ejection bin. The injection port is located above the sealed bin body and communicates with the outside world. A water spray motor connected with the control component is installed on top of the sealed bin body. An output shaft of the water spray motor penetrates through the sealed bin body and extends into the injection port. The output shaft of the water spray motor and the sealed bin body are in dynamic sealing connection.

Preferably, the control component includes a winding motor and a control system. The winding motor is fixedly installed out of the ejection bin. The output shaft of the winding motor penetrates through the ejection bin and is fixedly connected with the winding component. The winding component is rotatably connected with an inner wall of the ejection bin under the driving of the winding motor. The control system is installed in the sealed bin body and is electrically connected with the winding motor through a conducting wire.

Preferably, the winding component includes a rotating shaft, a winding drum and a rotating joint. One end of the winding drum is fixedly connected with the output shaft of the winding motor, and the other end of the winding drum is rotatably connected with the inner wall of the ejection bin through the rotating shaft. The rotating joint is rotatably installed in the winding drum, the second end of the electric wire is wound on the winding drum, and the first end of the electric wire is electrically connected with the body through the rotating joint.

Preferably, the battery module includes a shell, a battery pack and a buoyancy plate. The buoyancy plate is provided on the shell, and the battery pack is provided in a sealed space inside the shell and detachably connected with the shell. A bottom of the shell is provided with a socket matched with the waterproof sealed plug, and the socket is therein provided with a connector electrically connected with the battery pack.

Preferably, the ejection bin is therein provided with an elastic component, and the elastic component is installed between the winding component and the battery module. The elastic component includes a fixed plate, a spring and a movable plate. The fixed plate is fixedly installed in the ejection bin and located above the winding component. The movable plate is slidably installed in the ejection bin. Two ends of the spring are fixedly connected with the fixed plate and the movable plate respectively. The fixed plate and the movable plate are respectively provided with a through hole for enabling the electric wire to penetrate through. The second end of the electric wire sequentially penetrates through the through holes on the fixed plate and the movable plate, and the second end of the electric wire is electrically connected with the waterproof sealed plug.

Preferably, the inner wall of the ejection bin is provided with a limiting block configured to limit the movable plate, and the limiting block is located close to the top opening.

Preferably, the waterproof sealed plug is provided with the buoyancy plate.

Preferably, the top opening of the ejection bin is provided with an inclined surface configured to assemble and disassemble the battery module.

Beneficial effects:
1. In the present application, as the ejection bin, the winding component, the battery module and the control component are provided, on the one hand, the troublesome process of frequent salvage and charging of the user may be avoided, and the battery pack may be disengaged, when powers out or in low battery, from the machine to float on the water surface. The user may directly replace a fully charged battery pack, retract the battery pack into the ejection bin after replacement, and continue to work directly without waiting or salvage, thereby improving the user experience and cleaning efficiency. On the other hand, even if salvage is needed, the user may directly pull up the electric wire without a hook to pull the machine out of the water surface and then carries the machine ashore, thereby omitting excessive steps. Specifically, the robot swimming pool cleaner may access close to a wall automatically in a state of low battery. When the robot swimming pool cleaner is about to be power off, the control component of the robot swimming pool cleaner releases a signal to a detection circuit of the winding component, such that the winding component stops winding. When the waterproof sealed plug and the battery module lose a traction force of the winding component, the whole waterproof sealed plug and the battery module are separated from the ejection bin, then the battery module floats on the water surface under the action of a buoyancy force, and the user on the bank may pull the battery module ashore, then unscrew the waterproof sealed plug, reinsert the charged battery pack into the machine, and then put the machine back to the water surface. Upon reception of an electric signal, the control component controls the winding component to start winding, and the waterproof sealed plug and the battery module are pulled back to the ejection bin.
2. In the present application, the water spray motor and the control system are disposed in the sealed bin body, the winding component is disposed in the ejection bin, and the ejection bin is disposed on one side of the sealed bin body, therefore, a waterproof effect is realized and a total volume of the robot swimming pool robot is reduced; in combination with the rotating joint, electric connection may be kept during rotation, and the electric wire is prevented from being twisted.
3. In the present application, the buoyancy plate in the battery module is disposed, thereby facilitating the shell and the battery pack to float on the water surface; the elastic module including the fixed plate, the spring and the movable plate is disposed, the movable plate may be propelled by using an elastic force of the spring such that the waterproof sealed plug and the battery module are disengaged from the ejection bin rapidly, thereby avoiding a stuck phenomenon, and the limiting block is disposed to prevent the movable plate from being disengaged from the ejection bin.
4. In the present application, the opening of the ejection bin is provided with the inclined surface convenient for assembly and disassembly of the battery module, thereby facilitating disengagement and recycling of the battery module.

### Brief Description of the Drawings

Fig. 1 illustrates a schematic diagram of an overall structure responsive to sufficient electric quantity in the present application.
Fig. 2 illustrates a schematic diagram of an overall structure responsive to insufficient electric quantity in the present application.
Fig. 3 illustrates a schematic diagram of a detailed structure of an A point in Fig. 1.
Fig. 4 illustrates a schematic diagram of a battery module structure of the present application.
Fig. 5 illustrates a schematic diagram of an installation structure of a winding component in the present application.

In the figures: 1. Body, 11. Ejection bin, 111. Limiting block, 12. Sealed bin body, 13. Injection port, 122. Water spray motor, 13. Garbage bin, 131. Sewage suction port, 14. Road wheel, 2. Winding component, 21. Rotating shaft, 22. Winding drum, 23. Rotating joint, 3. Elastic component, 31. Fixed plate, 32. Spring, 33. Movable plate, 4. Battery module, 41. Shell, 42. Battery pack, 43. Buoyancy plate, 44. Socket, 5. Electric wire, 6. Waterproof sealed plug, 7. Winding motor, 8. Control system.

### Detailed Description of the Embodiments

The technical solutions in the embodiments of the application are described clearly and completely below with reference to the accompanying drawings in the embodiments of the present application. It is apparent that the described embodiments are part rather than all embodiments of the present application.

All other embodiments obtained by those skilled in the art based on the embodiments of the present application without creative efforts shall fall within the scope of protection of the present application.

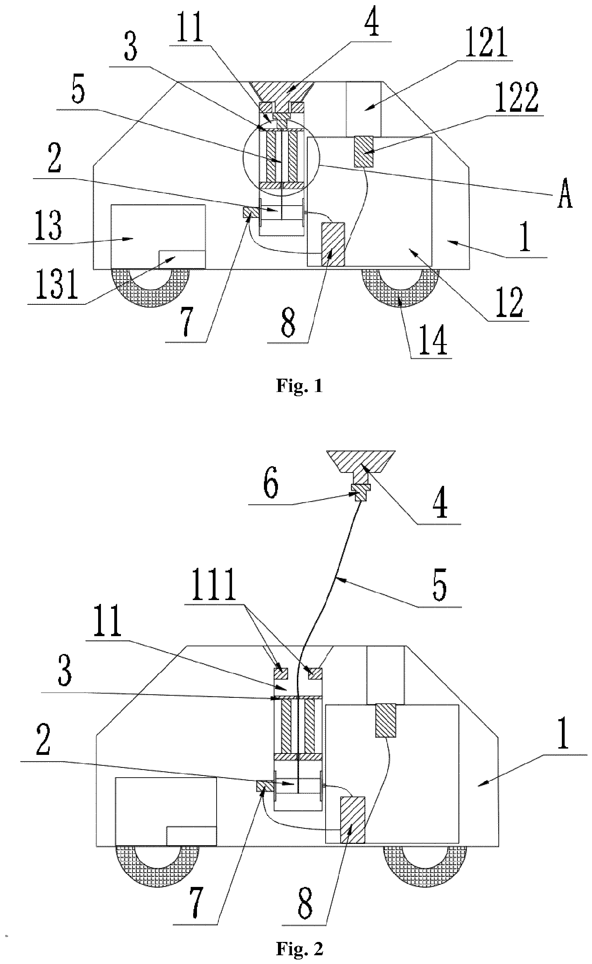

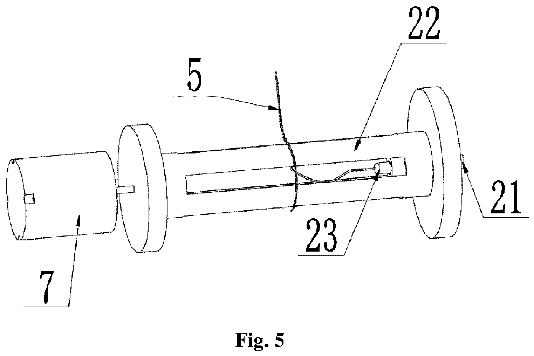

The present application provides a robot swimming pool cleaner with a convenient-to-replace battery. As shown in Figs. 1-5, the robot swimming pool cleaner includes a body 1; the body 1 is provided with a garbage bin 13 and an ejection bin 11 therein. The ejection bin 11 includes a top opening. The garbage bin 13 is located on one side of the ejection bin 11. The garbage bin 13 communicates with an outside world through a sewage suction port 131. A bottom of the body 1 is provided with a road wheel 14. Free walking of the robot swimming pool cleaner is realized through the road wheel 14, and garbage in the swimming pool is cleaned through the sewage suction port 131 and the garbage bin 13. A winding component 2 and a battery module 4 are sequentially installed in the ejection bin 11, preferably an elastic component 3 is disposed in the ejection bin 11 and installed between the winding component 2 and the battery module 4. The battery module 4 is located on top opening, and the battery module 4 is a buoyancy member. An overall density of the battery module 4 is smaller than the density of the water in the swimming pool. An electric wire 5 is wound on the winding component 2. A first end of the electric wire 5 is electrically connected with the body 1, and a second end of the electric wire 5 is wound on the winding component 2, penetrates through the elastic component 3, and electrically connected with a waterproof sealed plug 6. The battery module 4 and the waterproof sealed plug 6 are detachably connected. The waterproof sealed plug 6 is an aviation plug and is provided with a buoyancy plate 43 which facilitates floating thereof on a water surface.

The robot swimming pool cleaner further includes a control component. The control component is respectively connected with the winding component 2 and the battery module 4. When the battery module 4 is fully charged, the control component controls the winding component 2 to wind the electric wire 5, and the waterproof sealed plug 6 and the battery module 4 overcome the elastic force of elastic component 3 under an action of the winding component 2 and are located in the ejection bin 11. When the battery module 4 is in low battery, the control component controls the winding component 2 to unwind the electric wire 5, and the waterproof sealed plug 6 and the battery module 4 are disengaged from the ejection bin 11 under the action of the elastic component 3. For further facilitating replacement for the battery of the robot swimming pool cleaner, when the robot swimming pool cleaner is in low battery, and before the battery module 4 is disengaged from the ejection bin 11, the robot swimming pool cleaner may move towards an edge of the swimming pool automatically, which may be specifically implemented through a sensor or an infrared ray.

In the present embodiment, as the ejection bin 11, the winding component 2, the elastic component 3, the battery module 4 and the control component are provided, on the one hand, a troublesome process of frequent salvage and charging of a user may be avoided, and the battery pack 4 may be disengaged, when powers out or in low battery, from a machine and floats on a water surface, the user may directly replace a fully charged battery pack 42, retract the battery pack 4 into the ejection bin 11 after replacement, and continue to work without waiting or salvage, thereby improving the user experience and cleaning efficiency. On the other hand, even if salvage is needed, the user may directly pull up the electric wire 5 without a hook to pull the machine out of the water surface and then carries the machine ashore, thereby omitting excessive steps. Specifically, the robot swimming pool cleaner may access close to a wall automatically in a state of low battery. When the robot swimming pool cleaner is about to be power off, the control component of the robot swimming pool cleaner releases a signal to a detection circuit of the winding component 2, such that the winding component 2 stops winding. When the waterproof sealed plug 6 and the battery module 4 lose a traction force of the winding component, the elastic component 3 in the ejection bin 11 ejects the whole waterproof sealed plug 6 and the battery module 4 rapidly to be separated from the ejection bin 11, then the battery module 4 floats on the water surface under the action of a buoyancy force, and the user on the bank may pull the battery module ashore, then unscrew the waterproof sealed plug 6, reinsert the charged battery pack 42 into the machine, and then put the machine back to the water surface. Upon reception of an electric signal, the control component controls the winding component 2 to start winding, and the waterproof sealed plug 6 and the battery module are pulled back to the ejection bin 11.

Preferably, as shown in Fig. 1, Fig. 2 and Fig. 5, the body 1 is provided with a sealed bin body 12 and an injection port 121 therein. The sealed bin body 12 is located at one side, away from the garbage bin 13, of the ejection bin 11. The injection port 121 is located above the sealed bin body 12 and communicates with the outside world. A water spray motor 122 connected with the control component is installed on top of the sealed bin body 12. An output shaft of the water spray motor 122 penetrates through the sealed bin body 12 and extends into the injection port 121, and the output shaft of the water spray motor 122 and the sealed bin body 12 are in dynamic sealing connection. The control component includes a winding motor 7 and a control system 8. The winding motor 7 is fixedly installed out of the ejection bin 11, and the output shaft of the winding motor 7 penetrates through the ejection bin 11 and is fixedly connected with the winding component 2. A joint between the output shaft of the winding motor 7 and the ejection bin 11 is provided with a bearing for reduction of frictional resistance. The winding component 2 is rotatably connected with an inner wall of the ejection bin 11 under the driving of the winding motor 7. The control system 8 is installed in the sealed bin body 12 and is electrically connected with the winding motor 7 through a conducting wire. The winding component 2 includes a rotating shaft 21, a winding drum 22 and a rotating joint 23. One end of the winding drum 22 is fixedly connected with the output shaft of the winding motor 7, and the other end of the winding drum 22 is rotatably connected with the inner wall of the ejection bin 11 through the rotating shaft 21. The rotating joint 23 is rotatably installed in the winding drum 22, the second end of the electric wire 5 is wound on the winding drum 22, and the first end of the electric wire 5 is electrically connected with the body 1 through the rotating joint.

In the present embodiment, the water spray motor 122 and the control system 8 are disposed in the sealed bin body 12, the winding component 2 is disposed in the ejection bin 11, and the ejection bin 11 is disposed on one side of the sealed bin body 12. Therefore, a waterproof effect is realized and a total volume of the robot swimming pool robot is reduced. In combination with the rotating joint 23, electric connection may be kept during rotation, and the electric wire 5 is prevented from being twisted.

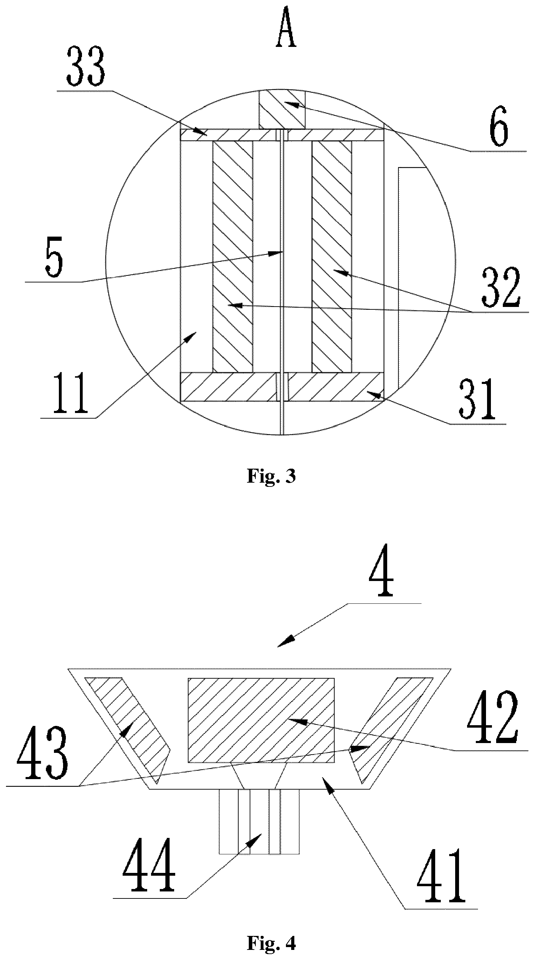

Preferably, as shown in Fig. 1, Fig. 2 and Fig. 4, the battery module 4 includes a shell 41, a battery pack 42 and a buoyancy plate 43. The buoyancy plate 43 is provided on the shell 41, and the battery pack 42 is provided in a sealed space inside the shell 41 and is detachably connected with the shell 41. A bottom of the shell 41 is provided with a socket 44 matched with the waterproof sealed plug 6, and the socket 44 is provided with a connector therein electrically connected with the battery pack 42. As shown in Fig. 3, the elastic component 3 includes a fixed plate 31, a spring 32 and a movable plate 33. The fixed plate 31 is fixedly installed in the ejection bin 11 and is located above the winding component 2. The movable plate 33 is slidably installed in the ejection bin 11. Two ends of the spring 32 are fixedly connected with the fixed plate 31 and the movable plate 33 respectively. The fixed plate 31 and the movable plate 33 are respectively provided with a through hole for enabling the electric wire 5 to penetrate through. The second end of the electric wire 5 sequentially penetrates through the through holes on the fixed plate 31 and the movable plate 33, and the second end of the electric wire 5 is electrically connected with the waterproof sealed plug 6. The inner wall of the ejection bin 11 is provided with a limiting block 111 configured to limit the movable plate 33, and the limiting block 111 is located close to the top opening.

In the present embodiment, the buoyancy plate 43 is disposed in the battery module 4, thereby facilitating the shell 41 and the battery pack 42 to float on the water surface rapidly. The fixed plate 31, the spring 32 and the movable plate 33 are disposed, the movable plate 33 may be propelled by using an elastic force of the spring 32 such that the waterproof sealed plug 6 and the battery module 4 are disengaged from the ejection bin rapidly, thereby avoiding a stuck phenomenon, and the limiting block is disposed to prevent the movable plate 33 from being disengaged from the ejection bin 11.

Preferably, as shown in Fig. 1 and Fig. 2, the opening of the ejection bin 11 is provided with an inclined surface convenient for assembly and disassembly of the battery module 4.

In the present embodiment, the top opening of the ejection bin 11 is provided with the inclined surface convenient for assembly and disassembly of the battery module 4, thereby facilitating disengagement and recycling of the battery module 4.

During an operation process, as shown in Figs. 1-5, when the robot swimming pool cleaner accesses close to an edge with low battery, the winding motor 7 stops a winding action force on the winding drum 22, such that the spring 32 of the ejection bin 11 and the battery module 4 lose the traction force instantly. Therefore, the battery module 4 is ejected from an inside of the machine, the battery module 4 floats on the water surface under the action of the buoyancy plate 43, then the user may unscrew the waterproof sealed plug 6 and pull out the battery module 4. When the user reinserts the fully-charged battery module 4 into the waterproof sealed plug 6, the robot swimming pool cleaner receives the electric signal instantly, the winding motor 7 works and rotates to drive the winding drum 22 to wind, and withdraws the electric wire 5 out of the robot swimming pool cleaner, the battery module 4 returns to the machine under the action of a pull force. When the battery module 4 returns to an original position, the winding motor 7 maintains the force, and then the machine begins to clean continuously.

Finally, it is to be noted that the above embodiments are only used for illustrating, rather than limiting, the technical solutions of the present application. Other modifications or equivalent replacements made by those of ordinary skill in the art based on the technical solutions of the present application without departing from the spirits and scopes of the technical solutions of the present application shall fall within the scope of claims of the present application.

## Claims

1. A robot swimming pool cleaner with a convenient-to-replace battery, comprising a body, wherein the body is provided with a garbage bin and an ejection bin therein; the ejection bin comprises a top opening; the garbage bin is located on one side of the ejection bin; the garbage bin communicates with an outside world through a sewage suction port; a bottom of the body is provided with a road wheel; a winding component and a battery module are sequentially installed in the ejection bin; the battery module is located on top opening; the battery module is a buoyancy member; an electric wire is wound on the winding component; a first end of the electric wire is electrically connected with the body, a second end of the electric wire is wound on the winding component and electrically connected to a waterproof sealed plug; the battery module and the waterproof sealed plug are detachably connected;
the robot swimming pool cleaner further comprises a control component which is respectively connected with the winding component and the battery module; when the battery module is fully charged, the control component controls the winding component to wind the electric wire, the waterproof sealed plug and the battery module are located in the ejection bin under an action of the winding component; when the battery module is in low battery, the control component controls the winding component to unwind the electric wire, the waterproof sealed plug and the battery module are disengaged from the ejection bin.

2. The robot swimming pool cleaner with a convenient-to-replace battery as claimed in claim 1, wherein the body is provided with a sealed bin body and an injection port therein; the sealed bin body is located at one side, away from the garbage bin, of the ejection bin; the injection port is located above the sealed bin body and communicates with the outside world; a water spray motor connected with the control component is installed on top of the sealed bin body; an output shaft of the water spray motor penetrates through the sealed bin body and extends into the injection port; and the output shaft of the water spray motor and the sealed bin body are in dynamic sealing connection.

3. The robot swimming pool cleaner with a convenient-to-replace battery as claimed in claim 2, wherein the control component comprises a winding motor and a control system; the winding motor is fixedly installed out of the ejection bin, and the output shaft of the winding motor penetrates through the ejection bin and is fixedly connected with the winding component; the winding component is rotatably connected with an inner wall of the ejection bin under the driving of the winding motor, and the control system is installed in the sealed bin body and electrically connected with the winding motor through a conducting wire.

4. The robot swimming pool cleaner with a convenient-to-replace battery as claimed in claim 3, wherein the winding component comprises a rotating shaft, a winding drum and a rotating joint; one end of the winding drum is fixedly connected with the output shaft of the winding motor, and the other end of the winding drum is rotatably connected with the inner wall of the ejection bin through the rotating shaft; the rotating joint is rotatably installed in the winding drum; the second end of the electric wire is wound on the winding drum, and the first end of the electric wire is electrically connected with the body through the rotating joint.

5. The robot swimming pool cleaner with a convenient-to-replace battery as claimed in claim 1 or 2, wherein the battery module comprises a shell, a battery pack and a buoyancy plate; the buoyancy plate is provided on the shell, and the battery pack is provided in a sealed space inside the shell and is detachably connected with the shell; a bottom of the shell is provided with a socket matched with the waterproof sealed plug, and the socket is therein provided with a connector electrically connected with the battery pack.

6. The robot swimming pool cleaner with a convenient-to-replace battery as claimed in claim 1 or 2, wherein the ejection bin is provided with an elastic component therein; the elastic component is installed between the winding component and the battery module; the elastic component comprises a fixed plate, a spring and a movable plate; the fixed plate is fixedly installed in the ejection bin and is located above the winding component; the movable plate is slidably installed in the ejection bin; two ends of the spring are fixedly connected with the fixed plate and the movable plate respectively; the fixed plate and the movable plate are respectively provided with a through hole for enabling the electric wire to penetrate through; the second end of the electric wire sequentially penetrates through the through holes on the fixed plate and the movable plate; and the second end of the electric wire is electrically connected with the waterproof sealed plug.

7. The robot swimming pool cleaner with a convenient-to-replace battery as claimed in claim 6, wherein the inner wall of the ejection bin is provided with a limiting block configured to limit the movable plate, and the limiting block is located close to the top opening.

8. The robot swimming pool cleaner with a convenient-to-replace battery as claimed in claim 1 or 2, wherein the waterproof sealed plug is provided with the buoyancy plate.

9. The robot swimming pool cleaner with a convenient-to-replace battery as claimed in claim 1 or 2, wherein the top opening of the ejection bin is provided with an inclined surface configured to assemble and disassemble the battery module.
